**Europäisches Patentamt**

**European Patent Office**

**Office européen des brevets**

(19)

(11) Veröffentlichungsnummer: **0 338 195 B1**

(12) **EUROPÄISCHE PATENTSCHRIFT**

(45) Veröffentlichungstag der Patentschrift:
27.12.91 Patentblatt 91/52

(51) Int. Cl.⁵: **F17D 1/20**, F16L 55/04,
B65B 37/06

(21) Anmeldenummer: **89101844.2**

(22) Anmeldetag: **03.02.89**

(54) **Förderleitung für ein zähflüssiges oder pastöses Füllgut.**

(30) Priorität: **22.04.88 DE 3813574**

(43) Veröffentlichungstag der Anmeldung:
**25.10.89 Patentblatt 89/43**

(45) Bekanntmachung des Hinweises auf die
Patenterteilung:
**27.12.91 Patentblatt 91/52**

(84) Benannte Vertragsstaaten:
**AT BE CH DE ES FR GB GR IT LI LU NL SE**

(56) Entgegenhaltungen:
**WO-A-85/04463**
**US-A- 3 487 855**

(73) Patentinhaber: **Effem GmbH**
**Eitzer Landstrasse**
**W-2810 Verden/Aller (DE)**

(72) Erfinder: **Gideon, Jürgen**
**Am Weissen Berge 2**
**W-2810 Verden/Aller (DE)**
Erfinder: **Krieger, Dieter**
**Kirchstrasse 37**
**W-2815 Langwedel-Etelsen (DE)**
Erfinder: **Mengel, Erich**
**Am Hubertushain 36**
**W-2810 Verden-Borstel (DE)**

(74) Vertreter: **Goddar, Heinz J., Dr. et al**
**FORRESTER & BOEHMERT**
**Widenmayerstrasse 4/I**
**W-8000 München 22 (DE)**

## Beschreibung

Die Erfindung betrifft eine Förderleitung zum Fördern von in einer Konservendose oder dgl. abzufüllendes, zähflüssiges oder pastöses Füllgut von einer Förderpumpe zu einer Füllmaschine.

Bei in Konservendosen oder dgl. abzufüllendem zähflüssigen oder pastösen Füllgut stellt sich das Problem, daß Schwankungen des Drucks in der Förderleitung, die sich aus Schwankungen der Förderleistung und-/oder der Abfülleistung ergeben, den Füllvorgang erheblich beeinträchtgen.

Der Erfindung liegt die Aufgabe zugrunde, den Druck in der Förderleitung zu verstetigen.

Erfindungsgemäß wird diese Aufgabe gelöst durch eine posaunenrohrartig ausgebildete Strecke mit zwei sich parallel zueinander erstreckenden Abschnitten und einem U-förmigen Bogen, dessen Schenkel teleskopartig mit den Abschnitten zusammenwirken, wobei auf den U-förmigen Bogen angreifende, gegen den Druck des Fördergutes in Richtung auf eine Verkürzung der Strecke wirkende Mittel vorgesehen sind.

Ein bevorzugtes Ausführungsbeispiel zeichnet sich dadurch aus, daß diese Mittel durch eine pneumatische oder hydraulische Zylinder/Kolben-Einheit gebildet werden.

Weiter können Mittel zum Erfassen der jeweiligen Länge der Strecke vorgesehen sein.

Eine besonders bevorzugte Ausführungsform zeichnet sich dadurch aus, daß sich die Strecke in einer vertikalen Ebene erstreckt und am höchsten Punkt des U-förmigen Bogens mit einer Entlüftungseinrichtung versehen ist.

Weitere Merkmale und Vorteile der Erfindung ergeben sich aus der Beschreibung, in der ein Ausführungsbeispiel der Erfindung anhand einer Zeichnung erläutert wird. Dabei zeigt :

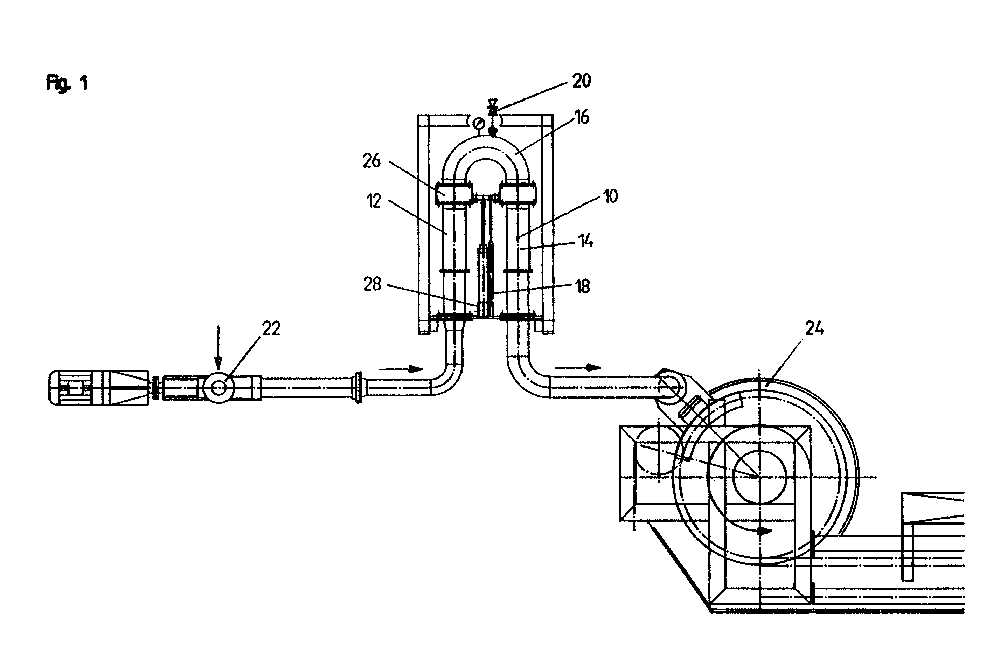

Fig. 1      eine Gesamtdarstellung der Förderleitung,

Fig. 2      eine Darstellung der Strecke in eingefahrenem Zustand, und

Fig. 3      eine Darstellung der Strecke in ausgefahrenem Zustand.

Eine Förderpumpe 22 mit einer Füllmaschine 24 verbindende Förderleitung ist mit einer Strecke 10 versehen, die durch zwei parallel zueinander verlaufende, gestreckte Abschnitte 12, 14 und einem U-förmigen Bogen 16 gebildet ist, wobei die Schenkel des U-förmigen Bogens 16 teleskopartig in den gestrecken Abschnitten 12, 14 verschiebbar angeordnet sind. Die Strecke 10 weist weiter eine hydraulische oder pneumatische Zylinder/ Kolben-Einheit 28 auf, die an mit dem Bogen 16 verbundene Flansche 26 angreift und auf den Bogen 16 eine Kraft ausübt, die dessen Schenkel in die gestreckten Abschnitte 14, 16 der Strecke 10 einführt. Die Strecke 10 ist weiter mit einem Mittel 18 versehen, das parallel zu der Kolben/Zylinder-Einheit 28 verläuft und die jeweilige Länge der Strecke 10 erfaßt.

Die Strecke 10 verstetigt den Druck in der Förderleitung : Wenn die Pumpleistung der Förderpumpe 22 die Abfülleistung der Füllmaschine 24 übersteigt, wird der Druck in der Förderleitung ansteigen. Dies führt dazu, daß der U-förmige Bogen 16 gegen die Kraft der Zylinder/Kolben-Einheit aus den gestreckten Abschnitten 12, 14 der Strecke 10 herausfährt, die sich dadurch ergebende Verlängerung der Strecke 10 läßt den Druck in der Förderleitung wieder abfallen. Wenn der Druck in der Förderleitung dagegen aufgrund einer Verringerung der Pumpleistung abfällt, wird der U-förmige Bogen 16 in die gestreckten Abschnitte 12, 14 der Strecke 10 aufgrund der von der Kolben/Zylinder-Einheit 28 ausgeübten Kraft wieder einfahren, was zu einer Verkürzung der Länge der Strecke 10 und somit zu einer Erhöhung des Drucks in der Förderleitung führt. Die ständige Anpassung der Länge der Strecke 10 an den jeweiligen Förderdruck ermöglicht also eine Verstetigung dieses Förderdrucks.

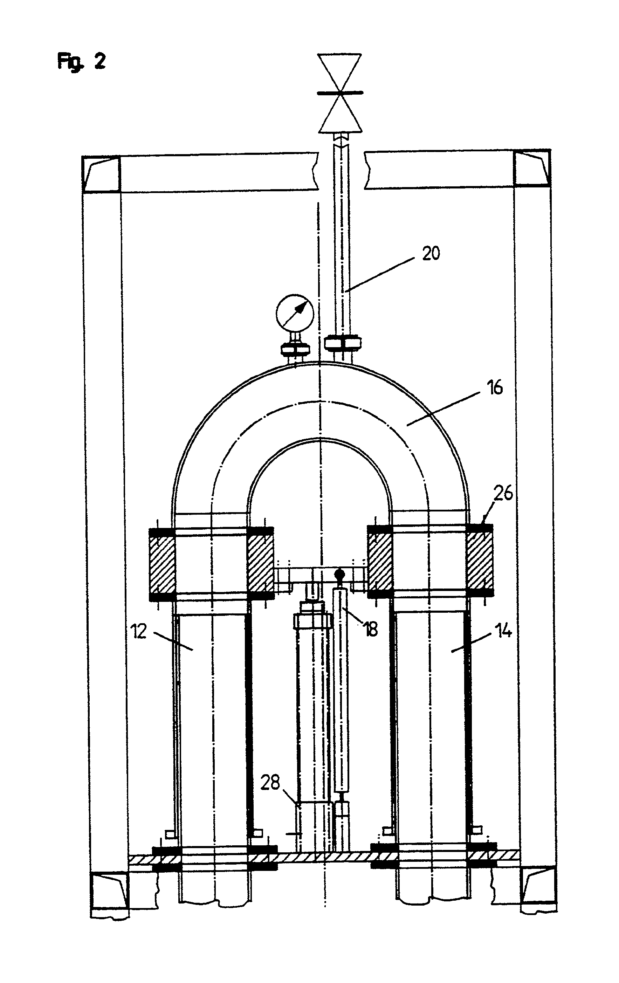

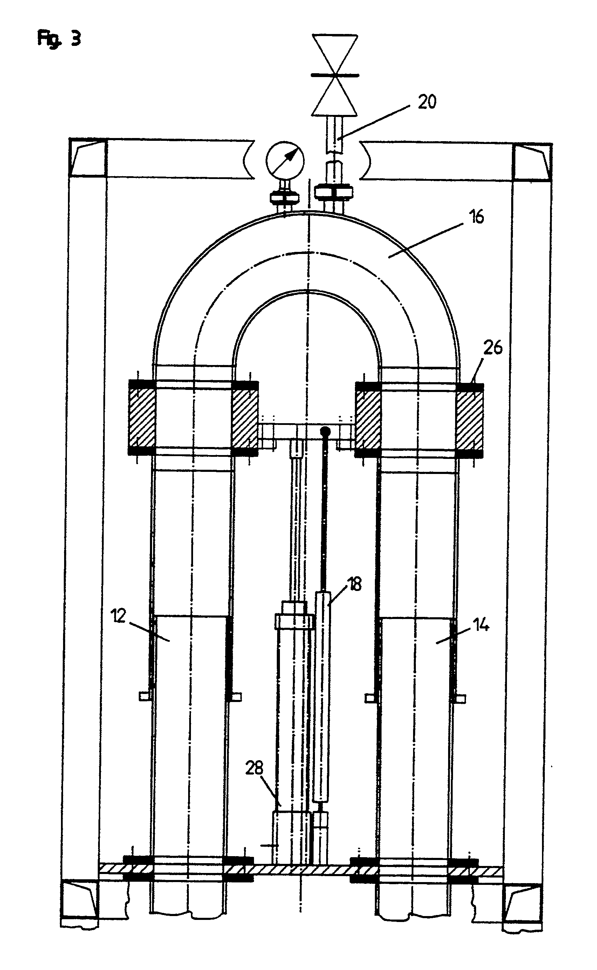

Die bei einem bevorzugten Ausführungsbeispiel vorgesehenen Mittel 18 zum Erfassen der jeweiligen Länge der Strecke ermöglichen es, die Förderleistung so zu regeln, daß die Strecke 10 in Normalposition eine zwischen der in Fig. 2 gezeigten Stellung mit minimaler Länge und der in Fig. 3 gezeigten Stellung mit maximaler Länge einnimmt, so daß auftretende positive und negative Druckschwankungen ständig ausgeglichen werden können.

Die Fig. 2 und 3 verdeutlichen weiter, daß bei einer Erstreckung der Strecke 10 in einer vertikalen Ebene an dem höchsten Punkt des U-förmigen Bogens 16 eine Entlüftungseinrichtung 20 vorgesehen ist, die dazu dient, die sich an dem höchsten Punkt des Bogens sammelnde Luft abzulassen. Diese Entlüftungseinrichtung 20 ermöglicht es weiter, bei Anfahren der Anlage mit dem Produkt herangeführte Luft abzuführen.

Durch die posaunenartige Ausbildung der Strecke 10 wird deren Länge um jeweils das Doppelte das Hubes der Kolben/Zylinder-Einheit 28 verlängert bzw. verkürzt. Der mechanische Aufbau ist einfach, der gegen den Förderdruck wirkende Druck der Kolben/Zylinder-Einheit 28 kann auf einfache Weise bestimmt werden.

2

## Patentansprüche

1. Förderleitung zum Fördern von in einer Konservendose oder dgl. abzufüllendes, zähflüssiges oder pastöses Füllgut von einer Förderpumpe zu einer Füllmaschine, gekennzeichnet durch eine posaunenrohrartig ausgebildete Strecke (10) mit zwei sich parallel zueinander erstreckenden Abschnitten (12, 14) und einem U-förmigen Bogen (16), dessen Schenkel teleskopartig mit den Abschnitten (12, 14) zusammenwirken, wobei auf den U-förmigen Bogen (16) angreifende, gegen den Druck des Fördergutes in Richtung auf eine Verkürzung der Strecke (10) wirkende Mittel (28) vorgesehen sind.

2. Förderleitung nach Anspruch 1, dadurch gekennzeichnet, daß die Mittel (28) durch eine pneumatische oder hydraulische Zylinder/Kolben-Einheit gebildet werden.

3. Förderleitung nach Anspruch 1 und Anspruch 2, gekennzeichnet durch Mittel (18) zum Erfassen der jeweiligen Länge der Strecke (10).

4. Förderleitung nach einem der vorangehenden Ansprüche, dadurch gekennzeichnet, daß sich die Strecke (10) in einer vertikalen Ebene erstreckt und am höchsten Punkt des U-förmigen Bogens (16) mit einer Entlüftungseinrichtung (20) versehen ist.

## Claims

1. Conveying pipe for conveying a viscose or pasty filling product, which is to be transferred to a preserve tin or the like, from a conveying pump to a filling machine, characterised by a route (10) of trumpet tube type construction having two portions (12, 14), extending parallel to each other, and a U-shaped bend (16), the limbs of which interact telescopically with the portions (12, 14), means (28) being provided which act on the U-shaped bend (16) counter to the pressure of the conveyed product in the direction towards a shortening of the route (10).

2. Conveying pipe according to Claim 1, characterised in that the means (28) are formed by a pneumatic or hydraulic piston-cylinder unit.

3. Conveying pipe according to Claim 1 and Claim 2, characterised by means (18) for recording the respective length of the route (10).

4. Conveying pipe according to one of the preceding claims characterised in that the route (10) extends in a vertical plane and is provided at the highest point of the U-shaped bend (16) with a venting device (20).

## Revendications

1. Conduite de transport pour le transport, d'une pompe de transport à une machine de remplissage, d'une matière de remplissage visqueuse ou pâteuse qui doit être déversée dans une boîte de conserves ou similaire, caractérisée par un tronçon (10) réalisé à la manière d'un tube de trombone, tronçon qui présente deux parties (12, 14) s'étendant parallèlement entre elles et un coude en forme de U (16) dont les branches coopèrent de manière télescopique avec les parties (2, 14), un moyen (28) étant prévu, qui agit sur le coude en forme de U (16) à l'encontre de la pression de la matière de remplissage en vue de raccourcir le tronçon (10).

2. Conduite de transport selon la revendication 1, caractérisée en ce que le moyen (28) est constitué par un ensemble cylindre/piston pneumatique ou hydraulique.

3. Conduite de transport selon les revendications 1 et 2, caractérisée par un moyen (18) pour enregistrer la longueur respective du tronçon (10).

4. Conduite de transport selon l'une des revendications précédentes, caractérisée en ce que le tronçon (10) s'étend dans un plan vertical et est muni, au point le plus haut du coude en forme de U (16), d'un dispositif de purge d'air (20).

Fig. 1

Fig. 2

**Fig. 3**